# EUROPEAN PATENT APPLICATION

(11) **EP 4 206 076 A1**
(43) Date of publication of application: **05.07.2023**
(21) Application number: 21218353.7
(22) Date of filing: 30.12.2021
(51) Int. Cl.: B64G 1/40

(54) **A PROPULSION SYSTEM**

(71) Applicant: Airbus Defence and Space Limited, Stevenage Hertfordshire SG1 2AS (GB)
(72) Inventor: Sadler, James, Hertfordshire (GB); Gray, Howard, Hertfordshire (GB); Wilson, Sam, Hertfordshire (GB)
(74) Representative: Newcombe, Christopher David

(57) **Abstract**

The invention relates to a propulsion system (100) for a spacecraft. The system comprises an electrical propulsion engine (101) comprising an anode (103) and a cathode (104), a chemical propulsion engine (102), a pressurant gas system configured to feed inert gas directly to the cathode (104). The systems further comprises a propellant feed system configured to deliver H₂O (water) to both the electrical and chemical propulsion engines, an electrolyser (107), an electrolysed gas storage and feed system, and a vapouriser (110).

## Description

### Field of the Invention

The present invention relates generally to a propulsion system for a spacecraft and particularly to a hybrid propulsion system.

### Background

Spacecraft propulsion systems can include multiple types of engines, such as chemical or electrical propulsion engines.

Chemical propulsion systems are typically used for high thrust manoeuvers, including fast orbit raising, short duration attitude control manoeuvers including de-tumbling and safe mode acquisition, and chemical orbit raising in non-electric orbit raising (EOR) spacecraft. Chemical propulsion systems typically generate thrusts ≥0.15N, and can generate thrusts up to several hundred Newtons at specific impulses (Iₛₚ) typically lower than 500 seconds. Chemical propulsion systems can be either bipropellant or monopropellant systems and generate thrust by expelling gases generated via chemical reactions through a nozzle. The cost of chemical propulsion systems and propellants is generally low.

Electrical propulsion systems are used for efficient high Iₛₚ manoeuvers where thrust is not a constraint, such as those with large delta-V orbit raising requirements, for example in EOR spacecraft. Electrical propulsion engines, such as Hall thrusters, typically use xenon or other noble gases as propellants. These engines generate very low thrusts at specific impulses typically from 700 seconds up to several thousand seconds. The cost of these systems and propellants is generally high.

Conventionally, where a cross-over of high thrust and high specific impulse is required, two separate systems need to be added to a spacecraft at a significant cost, volume and mass penalty.

### Summary of the Invention

According to a first aspect, there is provided a propulsion system for a spacecraft comprising at least one electrical propulsion engine comprising at least one anode and at least one cathode; at least one chemical propulsion engine; a pressurant gas system comprising an inert gas pressurant, the pressurant gas system configured to feed inert gas directly to the at least one cathode. The system further comprises a propellant feed system configured to deliver a propellant comprising H₂O to both the at least one chemical propulsion engine and the at least one electrical propulsion engine; at least one electrolyser; an electrolysed gas storage and feed system configured to receive electrolysed gas from the at least one electrolyser and deliver the electrolysed gas to the at least one chemical propulsion engine; and a vapouriser configured to transform the H₂O into vapour which is fed into the at least one anode.

In some embodiments, the electrolysed gas storage and feed system comprises plenum tanks configured to store the electrolysed gas.

In some embodiments, the inert pressurant gas is helium, neon, argon, krypton, xenon or nitrogen.

In some embodiments, the cathode is a thermionic cathode.

In some embodiments, the electric propulsion engine is a hall-effect thruster, a cusp field thruster, or a gridded ion thruster.

In some embodiments, the system further comprises a pressure regulator to control the flow of inert gas to the at least one cathode.

In some embodiments, the propulsion system further comprises a second chemical thruster configured to directly receive H₂O.

### Brief Description of the Drawings

Fig. 1 illustrates a propulsion system according to an embodiment of the present invention.
Fig. 2 illustrates a propulsion system according to an embodiment of the present invention.
Fig. 3 illustrates a propulsion system according to an embodiment of the present invention.

### Detailed Description

Spacecraft comprising multiple propulsion engines are well known. Conventional propulsion systems include separate electrical and chemical propulsion engines, each with their own dedicated propellant supply system and propellant. Typical chemical propulsion systems can also comprise separate fuel and oxidiser, for bipropellant systems, supply and a combustion chamber, and use a chemical thruster to direct exhaust gases. Typical electrical propulsion systems comprise an electric thruster, which may incorporate a plasma generator.

A propulsion system for a spacecraft may include both an electrical propulsion engine and a chemical propulsion engine because each engine has specific advantages which necessitate their place on a spacecraft. In particular, chemical propulsion engines are typically used when high thrust is required and electrical propulsion engines are used when high Iₛₚ is required. Where a mission requires both high thrust and high efficiency, two separate systems are added to the spacecraft, at a significant cost and mass penalty.

Hybrid propulsion systems as described herein relate to propulsion systems comprising a chemical engine and an electrical engine which are both fuelled by a common propellant. Such hybrid propulsion systems can be defined as chemical-electrical hybrid propulsion systems. Similar hybrid propulsion systems to those disclosed herein may be found in WO2020/049090 and WO2020/049091.

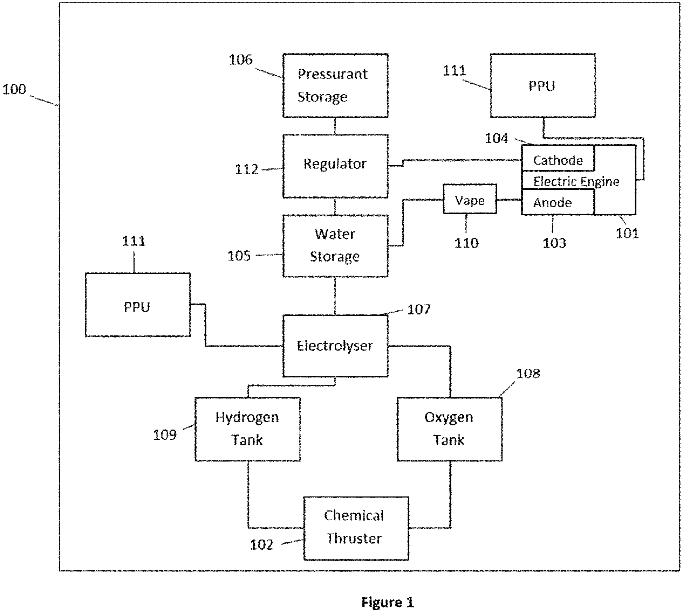

A propulsion system 100 is depicted in Fig. 1. In particular, Fig. 1 illustrates a hybrid propulsion system 100 comprising an electric propulsion engine 101 and a chemical propulsion engine 102. The electric engine 101 comprises an anode 103 and a cathode 104. The cathode 104 is configured to receive pressurant gas, from the pressurant storage tank 106 via a regulator 112. The propulsion system comprises a water storage tank 105, which forms part of the propellant feed system. In addition, the propulsion system comprises power processing units 111 which are configured to supply electric power. Located downstream of the water storage tank 105 is an electrolyser 107 which is configured to electrolyse water into H2 and 02. The electrolysed H₂ and O₂ are stored in respective tanks 109, 108, prior to being used in the chemical engine 102. Located between the water storage tank 105 and the electric engine 101 is a vapouriser 110; the vapouriser 110 is configured to vapourise liquid water into vapour, which is subsequently fed into the anode 103 of the electric engine 101.

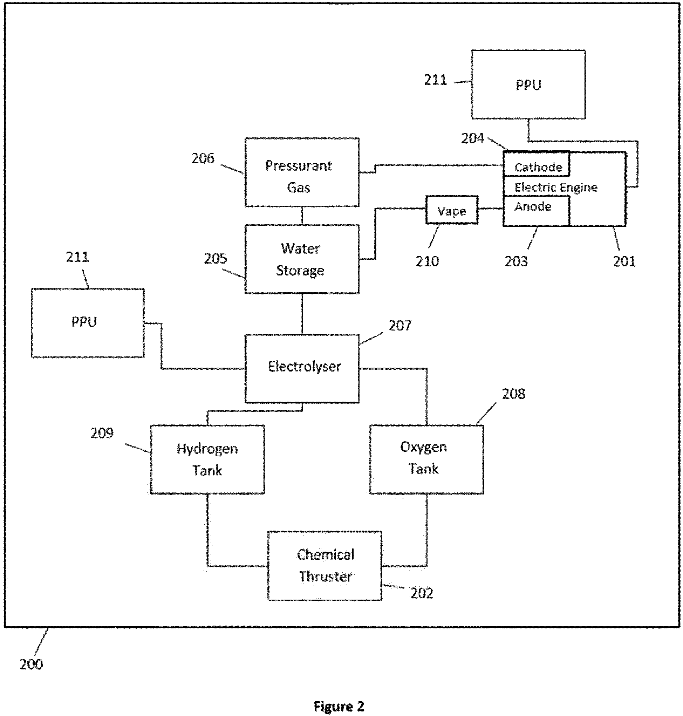

An alternative propulsion system 200 is depicted in Fig. 2. In particular, the presence of a regulator is not required; therefore, pressurant gas can be fed directly from the pressurant gas tank 206 to the cathode 204 of the electric engine 201. This simple configuration is of interest for very small throughput electric missions. Similarly to the embodiment illustrated in Fig. 1, the electric engine 201 comprises an anode 203, which is configured to receive vapourised water from the vapouriser 210. The water storage tank 205 is configured to supply water to the vapouriser 201 and the electrolyser 207. The electrolyser is configured to electrolyse the water into H2 and 02 which can be stored in tanks 208, 209 prior to being used in the chemical engine 202.

It will be understood that although only a single chemical propulsion engine and a single electrical propulsion engine has been depicted for the sake of clarity, a hybrid propulsion system may have more that one of each type of engine.

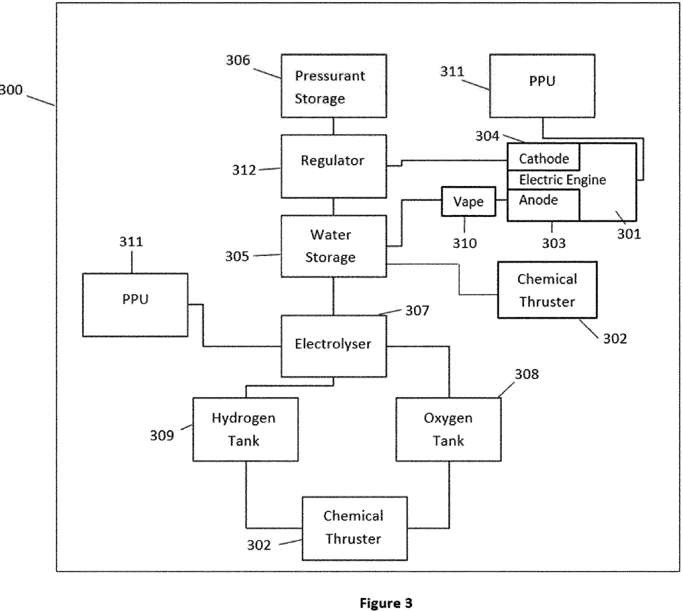

In an alternative propulsion system 300, see Fig. 3, an additional engine 302 is included that is configured to directly receive water from the water storage tank 305. In Fig. 3 similar components to those illustrated in Figs. 1 and 2 have been given corresponding reference numbers. It would be understood by the skilled person that the regulator 312 is not an essential component and could be removed.

The additional engine may be used for de-orbiting the satellite at end of life(EOL). This additional engine may be based on the reaction of magnesium or aluminium with water preferably in vapour phase. Examples of such systems are described in Experimental Study on Bulk Metal-Water Combustion for Small Spacecraft Propulsion and Initial Firing Tests of Aluminium Rod/Water Hybrid Rockets, AIAA Propulsion and Energy 2020 Forum, 24-28 August 2020*.*

Alternatively, the engine could be based on the direct feeding of liquid water, with further flash boiling of the water and release of puff of steam. The achievable thrust level is of about 0.3 mN/watt. Depending on the available power, a significant thrust level can be achieved. When used for an EOL situation, more power from the satellite is available.

The propulsion system according to the present invention uses H₂O as a propellant for both chemical and electrical propulsion. H₂O is not known as a suitable propellant for chemical or electric propulsion. In particular, limitations of use of H₂O include being challenging to generate a chemical reaction with a second chemical component, which is exothermic and suitable for propulsion in a chemical propulsion engine. Similarly, a limitation resulting from the use of H₂O as propellant in an electrical engine is the generation of hydroxyl and oxygen ions, which are particularly aggressive with respect to neutral gas. Furthermore, how to exhibit a stable plasma, while achieving good power to thrust conversion was hypothetical and has not been achieved.

The present inventors have surprisingly designed a system, which is able to overcome the known issues of using H₂O as propellant in an electrical engine. In particular, the inventors have identified that injection of H₂O vapour at the anode with supply of an inert pressurant gas to the cathode of an electric engine eliminates corrosion of the cathode. In addition, compared to known electric engines, which typically use an inert gas such as xenon to feed both the anode and the cathode, the present system feeds inert gas only to the cathode. With the high costs associated with typically used inert gases, the present system therefore represents a more cost efficient system, whereby use of inert gas is limited to only supplying the cathode.

The present inventors also noted that when a hybrid propulsion system according to the present invention is used, electric propulsion is not used simultaneously with chemical propulsion. Therefore, the power allocated to the use of the electric engine is available to assist in the decomposition of H₂O into H2 and 02, without adding to the power constraints on the satellite power generation and storage subsystem.

As a result of using a common propellant, the hybrid propulsion system allows for Electric Orbit Raising (EOR), Chemical Orbit Raising (COR), chemical or electrical station keeping/altitude control, or any other manoeuvres. This removes the need for using separate chemical and electrical propulsion systems on the same spacecraft, dramatically reducing system size and cost while still providing both high thrust and high specific impulse capabilities.

Hybrid propulsion systems require fewer components than a traditional propulsion system with separate electrical and chemical propulsion engines. In addition, H₂O is an inexpensive and less toxic propellant, when compared to traditional propellants. This dramatically reduces the direct system cost through equipment part counts; reduces the system mass and therefore the launch cost; reduces the integration and test complexity, cost, and duration; reduces the handling constraints and safety measures; and reduces operations at the launch site.

Cases which would benefit from a hybrid propulsion system that is able to deliver both high thrust and high Iₛₚ include (but are not limited to): small satellites, constellations, telecommunication platforms, imaging satellites, lunar supply, high power electric propulsion, in-orbit servicing missions, and deep space missions.

The propulsion system according to the present invention comprises a propellant feed system. The propellant feed system may comprise a propellant storage tank, in which propellant may be stored. The storage tank may be called a water storage tank. The storage tank may comprise baffles or alternative components in order to stabilise movement of propellant within the tank.

In some embodiments, the propellant storage tank may use a diaphragm, bladder or capillary action device to control the H₂O.

As would be clear to a person skilled in the art, the propulsion system may comprise additional pipework, valves, sensors, orifices, and any other flow control components typically found on a spacecraft.

The propulsion system comprises an electrolyser, which is preferably located downstream of the propellant storage tank and upstream of the chemical propulsion engine. The electrolyser is configured to electrolyse H₂O into H2 and 02, which may be stored in an electrolysed gas storage and feed system. The H₂ and O₂ may be stored in gas storage tanks prior to being combined within a chemical thruster to produce thrust. In some embodiments, H₂ and O₂ may be compressed, and may be stored in plenum tanks, under elevated pressure, within the chemical propulsion engine. In some embodiments, plenum storage tanks are not required and the electrolysed H₂ and O₂ are used directly after forming. The electrolysed gas storage and feed system may comprise a control unit which controls the flow of gas through the system and can modify the pressure at which the H₂ and O₂ is stored and/or fed to the chemical thruster.

A suitable electrolyser, such as that described in EP3348671, is configured to generate hydrogen and oxygen and comprises at least one electrolysis cell having at least one alkaline electrolyte. Preferably, the electrolyser is configured for repetitive production of hydrogen and oxygen, where liquid H₂O is split into molecular oxygen and molecular hydrogen via electric power, under energy consumption. An "electrolysis cell", in this context, is intended to mean a unit with at least two electrodes, at least one of which is preferably embodied as a hydrogen electrode and another one of which is embodied as an oxygen electrode, an electrical circuit connecting the two electrodes, with at least one electrolyte arranged between the two electrodes, and/or with an electrolyte-filled or ion-conducting membrane arranged at least between the two electrodes. Preferably, the unit is configured to execute a redox reaction. By an "electrolyte" is in particular an ion-conducting substance, preferably implemented as a solution, e.g. an alkaline solution, although any suitable electrolyte may be appropriately selected by a person skilled in the art, for example a potassium hydroxide solution.

The propulsion system according to the present invention comprises a pressurant gas system. The pressurant gas system is configured to control the pressure within the propellant feed system and may comprise pipework and flow control devices, such as valves, orifices, and heaters, to control the propellant state and mass flow to the chemical and electrical engines. The pressurant gas is an inert gas, such as helium, neon, argon, krypton, xenon or nitrogen.

In some embodiments, the pressurant gas is stored at high pressure and is fed to the propellant tank via a pressure regulation system. Such a system is able to maintain a consistent pressure within the propellant storage tank.

In some embodiments, the hybrid propulsion system includes one or more power processing units. The power processing unit can manage the electrical parameters of the power coming from the spacecraft power supply to tailor it to the requirements of the electrical engine and the electrolyser.

The hybrid propulsion system disclosed herein combines the low cost technologies, processes, high thrust engines and propellants of chemical propulsion with the high specific impulse engines of electric propulsion within one system by using H₂O as a common propellant in a hybrid propulsion system.

Electrical propulsion engines are configured to generate thrust with high Iₛₚ by converting electrical energy into kinetic energy. Electrical propulsion engines comprise at least one electric thruster, configured to accelerate ions or plasma using an electric, magnetic or electro-magnetic field. In this way, the electrical propulsion engine generates thrust acting on the spacecraft. Electrical propulsion engines also generally include one or more neutralisers. For example, electrical propulsion engines may comprise a cathode neutraliser, such as a hollow cathode.

In some embodiments, the electrical propulsion engine may comprise an electrostatic propulsion engine. Electrostatic propulsion engines, such as ion thrusters, rely on the Coulomb force for acceleration.

Suitable electrostatic engines include: Hall thrusters, gridded ion engines, ion engines, cusped field thrusters including high efficiency multistage plasma thruster (HEMPT). The use of electrostatic thrusters allows for stronger benefits in terms of achievable Iₛₚ and thus system performance.

For gridded ion thrusters that do not have explicitly an anode, the complete high voltage part of the thruster (discharge chamber and screen grid) acts as anode.

A preferred electrostatic engine is a cusp field thruster, in particular the advanced cusp field thruster (ACFT) developed by Airbus described in "Advanced Cusp Field Thrust with a 3D-printed discharge channel - Performance with Iodine and Xenon, IEPC 2019-A-621, Presented at the 36th International Electric Propulsion Conference, University of Vienna, Austria, September 15-20, 2019". The ACFT has a wide range of operation, featuring specific impulse up to 2000 s, power-to-thrust-ratio (PTTR) between 15 W/mN and 35 W/mN and thrust levels up to 14 mN. In principle, the ACFT is based on magnetic mirrors, which reflect charged particles, if their velocity parallel to the magnetic field lines is high enough. In particular, utilisation of multiple magnetic mirrors create so called "magnetic bottles", yielding a confinement of charged particles. This effect restrains high energetic electrons in a discharge channel, i.e. in the ionisation area. The confinement ensures that the electrons transfer their kinetic energy through collisions into ionisation, instead of hitting the anode with high energy.

In some embodiments, the pressurant gas system is a pressure regulated system, a repressurising system, or a blowdown system. Preferably, the hybrid propulsion system is pressure regulated.

It is known that one of the most sensitive components of an electrical propulsion engine is the neutraliser (for example the cathode) and the propellant used must not degrade the condition of the neutraliser, which may decrease the efficiency of the electrical propulsion engine or may even prevent the engine from operating entirely. As a result of this, only a very specific group of chemicals are known to be suitable for use in an electrical propulsion engine. One such suitable known chemical, as discussed above, is xenon.

According to the present invention, the pressurant gas is directly fed to the cathode of the electrical propulsion engine to minimise any potential compatibility issues.

Feeding the inert pressurant gas directly to the cathode prevents the propellant from degrading the cathode of the electrical propulsion engine and allows the use of H₂O as propellant which is cheap, readily available, and "green".

In some embodiments, a thermionic cathode may be used.

In some embodiments, the electrical propulsion engine comprises a mass flow controller. A mass flow controller may be required because electrical propulsion engines typically require lower inlet pressures than chemical propulsion engines and require a controlled mass flow at cathode and/or at anode; the overall pressure of the hybrid propulsion system is dictated by the pressure requirements of the chemical propulsion engine so a controller is needed.

In some embodiments, the propulsion system further comprises a desiccant, or other water vapour control method, located on a feed line connected to the cathode.

According to the present invention, the propulsion system comprises a vapouriser. In some embodiments, H₂O, in vapour form, is fed directly to the anode of an electric propulsion engine.

Chemical propulsion engines are configured to generate high thrust by converting chemical internal energy of a propellant into kinetic energy through a combustion reaction. High thrust chemical propulsion engines typically use a variety of chemically active solid, liquid or gaseous propellants to generate thrust by expelling gases thermodynamically through a nozzle. These systems generate high thrust (typically ≥0.15N up to several hundred Newtons) at specific impulses typically lower than 500 seconds.

Suitable chemical propulsion engines include bipropellant engines or hybrid rocket engines. For example, a hybrid rocket engine may utilise liquid H₂O and a suitable propellant which reacts with water when ignited, such as aluminium or magnesium.

In some embodiments, the propellant, H₂O, is stored as a liquid.

In some embodiments, the propellant, such as H₂O, is stored at a pressure greater than 1 bar and a temperature between 0-100 °C.

Further advantages provided by the embodiments of the presently disclosed hybrid propulsion system is that H₂O is readily available, cheap, and easy to transport and handle. H₂O is also particularly stable and is compatible with materials such as stainless steel, titanium, and polytetrafluoroethylene (PTFE), which are materials used on many existing systems. Therefore, conventional components and systems may be employed, avoiding the need to develop entirely new components.

### Example

The invention was tested on the ACFT mentioned above using H₂O as propellant. The test included using H₂O at the anode and xenon at the cathode. The engine was tested at a series of anode voltages and thrust stability was maintained, as illustrated in Table 1.

**Table 1**

| Anode Potential | Anode Current | Anode Power | Thrust | PTTR |
|---|---|---|---|---|
| 700 V | 425.45 mA | 297.82 W | 4.4 mN | 67.4 W/mN |
| 600 V | 393 mA | 236 W | 3.7 mN | 63 W/mN |
| 500 V | 422 mA | 211 W | 3.4 mN | 62 W/mN |

The results demonstrate that preliminary thruster performance is good; the ACFT is capable of stable operation using H₂O as propellant; and the hollow cathode, fed by xenon, was not damaged. In particular, the test achieved stable ignition and plasma; the plasma was stable with no beam outs or sputtering/unstable operation, and stability was maintained over a large range of 400V to 1200V.

Although embodiments of the present invention have been shown and described, it will be appreciated by those skilled in the art that changes may be made in these embodiments without departing from the invention, the scope of which is defined in the appended claims. Various components of different embodiments may be combined where the principles underlying the embodiments are compatible.

## Claims

1. A propulsion system for a spacecraft comprising:
at least one electrical propulsion engine comprising at least one anode and at least one cathode;
at least one chemical propulsion engine;
a pressurant gas system comprising an inert gas pressurant, the pressurant gas system configured to feed inert gas directly to the at least one cathode;
a propellant feed system configured to deliver a propellant comprising H₂O to both the at least one chemical propulsion engine and the at least one electrical propulsion engine;
at least one electrolyser;
an electrolysed gas storage and feed system configured to receive electrolysed gas from the at least one electrolyser and deliver the electrolysed gas to the at least one chemical propulsion engine; and
a vapouriser configured to transform the H₂O into vapour which is fed into the at least one anode.

2. The propulsion system according to claim 1, wherein the electrolysed gas storage and feed system comprises plenum tanks configured to store the electrolysed gas.

3. The propulsion system according to claim 1 or claim 2, wherein the inert pressurant gas is helium, neon, argon, krypton, xenon or nitrogen.

4. The propulsion system according to any one of claims 1 to 3, wherein the cathode is a thermionic cathode.

5. The propulsion system according to any one of claims 1 to 4, wherein the electric propulsion engine is a hall-effect thruster, a cusp field thruster, or a gridded ion thruster.

6. The propulsion system according to any one of claims 1 to 5, further comprising a pressure regulator to control the flow of inert gas to the at least one cathode.

7. The propulsion system according to any one of claims 1 to 6, further comprising a second chemical thruster configured to directly receive H₂O.
